# EUROPEAN PATENT SPECIFICATION

(11) **EP 4 335 631 B1**
(45) Date of publication and mention of the grant of the patent: **09.07.2025**
(21) Application number: 23194460.4
(22) Date of filing: 31.08.2023
(51) Int. Cl.: B29D 30/00, B29D 30/02

(54) **COMPOSITE STRUCTURE ASSEMBLY AND NON-PNEUMATIC TIRE PRODUCTION**
VERBUNDSTRUKTURANORDNUNG UND HERSTELLUNG EINES NICHTPNEUMATISCHEN REIFENS
ENSEMBLE DE STRUCTURE COMPOSITE ET PRODUCTION DE PNEU NON PNEUMATIQUE

(30) Priority: 09.09.2022 US 202217930916
(43) Date of publication of application: 13.03.2024
(73) Proprietor: The Goodyear Tire & Rubber Company, Akron, OH 44316 (US)
(72) Inventor: SIFFER, Frederic Gerard Auguste, L-7542 Mersch (LU); SPORTELLI, Francesco, 3249 Bettembourg (LU); SAMENI, Soheila, L-9157 Heiderscheid (LU)
(74) Representative: Kutsch, Bernd

(56) References cited:
- EP-A2- 4 015 201
- EP-B1- 3 946 913
- WO-A1-2022/123894

## Description

### Field of the Invention

The present invention generally relates to assembling a rubber part and a thermoplastic part into a composite structure. More specifically, the present invention relates to assembling a shearband comprising curable rubber and a connecting structure comprising an adhesion interphase part made of thermoplastic material. The composite structure may be or may be part of a vehicle tire, e.g., a non-pneumatic tire.

### Background of the Invention

Aspects of the invention relate to assembling a rubber part and a thermoplastic part into a composite structure and, more particularly, producing a non-pneumatic tire comprising the assembled parts.

Pneumatic tires have been the solution of choice for vehicular mobility for over a century and are still dominant on the tire market today. Pneumatic tires are efficient at carrying loads because all of their structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. So-called "bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

A shearband may be provided to transfer the load from contact with the ground through tension in the connecting structure (including, e.g., spokes or a connecting web) to the hub, creating a top loading structure. When such a shearband deforms, its preferred form of deformation is shear over bending. The shear mode of deformation may occur because of inextensible membranes located on the radially inner and the radially outer portions of the shearband. Non-pneumatic tires may have a shearband made from a shear layer sandwiched between at least two layers of inextensible belts or membranes.

An issue of importance in non-pneumatic tires is the connection between the shearband and the connecting structure. The connecting structure is the part of a non-pneumatic tire that connects the shearband to the wheel hub or to a ring structure that contacts the hub. The role of the connecting structure may be compared with the cushioning function of the air chamber of a pneumatic tire.

The connecting structure may be made of a different material than the shearband. In particular, the connecting structure may be made of a thermoplastic material, whereas the radially inner surface of the shearband may be provided by a rubber compound.

Patent document EP 4 015 201 A2 discloses a process for producing non-pneumatic tires, particularly a process for co-vulcanization of a rubber material to a thermoplastic surface, such as a shear band to a connecting structure of a non-pneumatic tire, such as a spoke.

### Summary of the Invention

The invention relates to a method in accordance with claims 1 or 10 respectively.

Dependent claims refer to preferred embodiments of the invention.

A preferred aspect of the invention pertains to a method of assembling a rubber part and a thermoplastic part into a composite structure. The method comprises providing a rubber part having a surface and providing the thermoplastic part having a surface comprising a plasma polymerized coating comprising a carbon-carbon double bond. The method further comprises applying a rubber adhesive on the coating and bringing the rubber part surface and the thermoplastic part surface with the rubber adhesive into contact so as to form a composite structure. In addition, the method comprises heat-treating the composite structure to bond the rubber part to the thermoplastic part.

According to a preferred embodiment, the composite structure is assembled in a mold or placed into a mold after assembly and wherein the heat-treatment of the composite structure comprises baking the composite structure in the mold. The rubber, the thermoplastic material or both may be cured (vulcanized) or further cured in this baking step.

According to a preferred embodiment, heat-treating the composite structure comprises heating the composite structure to a temperature in a range from 120°C to 180°C, preferably 140° to 170°C, but below a softening temperature of the thermoplastic part.

According to a preferred embodiment, the method comprises drying the rubber adhesive on the coating before bringing the rubber part and the thermoplastic part with the rubber adhesive into contact so as to form the composite structure.

According to a preferred embodiment, the method comprises plasma coating the thermoplastic part by acetylene atmospheric plasma polymerization so as to provide the thermoplastic part with the surface comprising the plasma polymerized coating comprising a carbon-carbon double bond. The application of the plasma coating may be carried out as described in US 2022/0194036 A1.

According to a preferred embodiment, the applying of the rubber adhesive on the plasma polymerized coating is carried out directly after the plasma coating of the thermoplastic part, e.g. not more than 5 minutes, preferably not more than 3 minutes, after the coating of the thermoplastic part.

According to a preferred embodiment, the rubber adhesive comprises at least one of a rubber cement and a rubber lattice, e.g. natural rubber latex.

According to a preferred embodiment, the applying the rubber adhesive is carried out by spray coating.

According to a preferred embodiment, the rubber adhesive is water-based.

According to a preferred embodiment, the rubber adhesive comprises at least one of reinforcing fillers (e.g. carbon black), one or more antioxidants, silica (e.g. precipitated amorphous silica). The rubber adhesive may comprise ZnO and/or sulfur. Also, the rubber adhesive may comprise one or more accelerators such as sulfenamides, thiurams, dithiocarbamates, mercaptobenzothiazoles and xanthates.

A further preferred aspect of the present invention relates to a method for producing a non-pneumatic tire. The method comprises providing a shearband comprising curable rubber; the shearband having a radially inner surface formed by the curable rubber and providing a connecting structure for connecting the shearband to a wheel hub, the connecting structure comprising an adhesion interphase part made of thermoplastic material with a plasma polymerized coating comprising a carbon-carbon double bond. The method further comprises applying a rubber adhesive on the coating and bringing the radially inner surface and the adhesion interphase part with the rubber adhesive into contact so as to form a composite structure. In addition, the method comprises heat-treating the composite structure to bond the shearband to the connecting structure, the bond being mediated by at least part of the rubber adhesive and the plasma polymerized coating.

According to a preferred embodiment, the composite structure is assembled in a mold or placed into a mold after assembly and wherein the heat-treatment of the composite structure comprises baking the composite structure in the mold. The curable rubber, the thermoplastic material or both may be cured (vulcanized) or further cured in this baking step.

According to a preferred embodiment, the heat-treating the composite structure comprises heating the composite structure to a temperature in a range from 120°C to 180°C, preferably 140° to 170°C, but below a softening temperature of the thermoplastic part.

According to a preferred embodiment, the method comprises drying the rubber adhesive on the coating before bringing the radially inner surface and the adhesion interphase part with the rubber adhesive into contact so as to form the composite structure.

According to a preferred embodiment, the method comprises plasma coating the connecting structure by acetylene atmospheric plasma polymerization so as to provide the connecting structure with the adhesion interphase part.

According to a preferred embodiment, the applying of the rubber adhesive on the plasma polymerized coating is carried out directly after the plasma coating of the connecting structure, e.g. not more than 5 minutes, preferably not more than 3 minutes, after the coating of the thermoplastic part.

According to a preferred embodiment, the rubber adhesive comprises at least one of a rubber cement and a rubber lattice, e.g. natural rubber latex.

According to a preferred embodiment, the applying the rubber adhesive is carried out by spray coating.

According to a preferred embodiment, the rubber adhesive is water-based.

According to a preferred embodiment, the rubber adhesive comprises at least one of reinforcing fillers (e.g. carbon black), one or more antioxidants, silica (e.g. precipitated amorphous silica). The rubber adhesive may comprise ZnO and/or sulfur. Also, the rubber adhesive may comprise one or more accelerators such as sulfenamides, thiurams, dithiocarbamates, mercaptobenzothiazoles and xanthates.

### Definitions

As used herein, the term "rubber" is intended to include both natural rubber compositions and synthetic rubber compositions. Unless otherwise specified, "rubber" designates a cured rubber (typically obtained from unsaturated rubber by sulfur or non-sulfur vulcanization). The rubber does not need be completely cured, i.e., its molecular chains may contain residual cure sites (e.g., allylic positions) available for crosslinking with other molecular chains. The expression "rubber composition" "compounded rubber" and "rubber compound" may be used interchangeably to refer to rubber (elastomer) which has been blended or mixed with various ingredients and materials, e.g., reinforcing fillers, such as carbon black, precipitated amorphous silica, or the like, and then cured. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers. "Curable rubber" designates rubber that has been at most partially cured and that can be cured (vulcanized) further. Curable rubber may include green rubber.

A "thermoplastic" is a plastic polymer that becomes pliable or moldable at an elevated temperature and solidifies upon cooling. Thermoplastics can be shaped by the action of heat and shear forces. The process is purely physical and does not involve either chemical transformation or crosslinking. The thermoplastics can include semi-crystalline (polypropylene, polyethylene, etc.) and/or amorphous thermoplastics (polystyrene, ABS, PC, etc.)

The expressions "axial" and "axially" are used herein to refer to lines or directions that are parallel to the axis of rotation of the tire.

The expressions "radial" and "radially" are used to mean the direction of a line intersecting the tire's axis of rotation at right angle.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
FIG. 1 is a perspective schematic view of a non-pneumatic tire;
FIG. 2 is a partial side elevational view of the non-pneumatic tire of Fig. 1;
FIG. 3 is an exploded view of the cross section III-III of Fig. 2;

The reader's attention is drawn to the fact that the drawings are not to scale. Furthermore, for the sake of clarity, proportions between height, length and/or width may not have been represented correctly.

### Detailed Description of Preferred Embodiments of the Invention

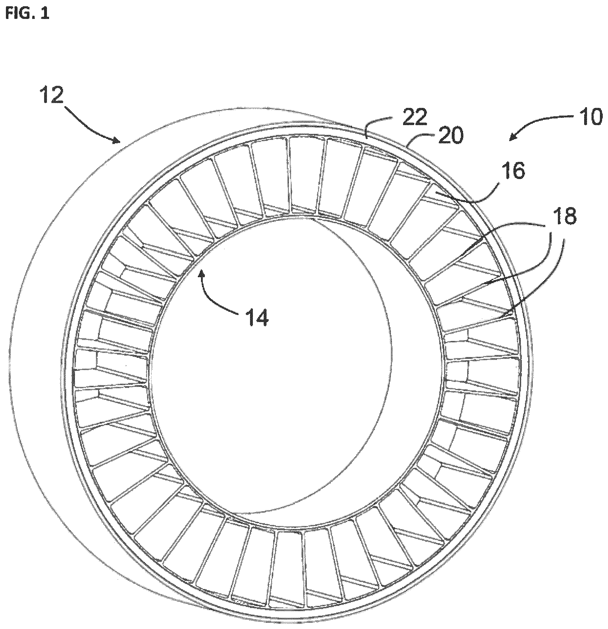

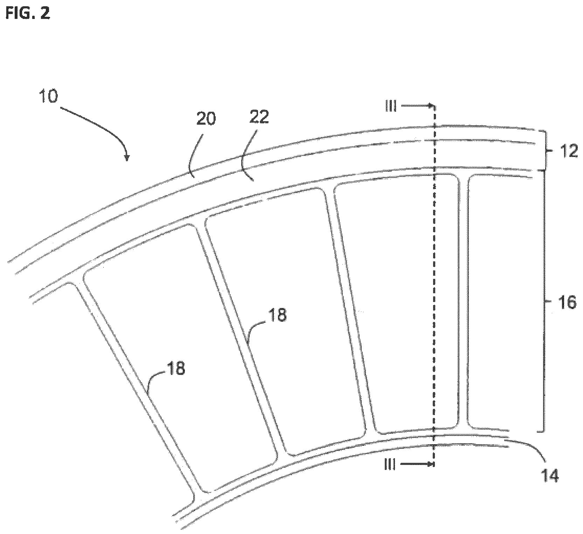

A non-pneumatic tire is shown in FIGS. 1-3. The non-pneumatic tire 10 may be of the top-loader type and include an outer annular band 12, an inner annular band 14, and a connecting structure 16 extending from the outer annular band 12 to the inner annular band 14. The inner annular band 14 has a first diameter, and the outer annular band 12 has a second diameter greater than the first diameter. The inner and outer annular bands 12, 14 are substantially coaxial with each other and centered on the tire axis. In the illustrated embodiment, the connecting structure 16 comprises a plurality of spokes 18 but other configurations may be possible.

The inner annular band 14 may be mounted on a hub or rim (not shown). The outer annular band 12 may include a circumferential tread 20 providing a surface for contacting the ground and a shearband 22. The tread 20 may include tread features such as, e.g., grooves, ribs, blocks, lugs, sipes, studs, etc. The tread 20 may be configured to improve the performance of the tire in various conditions.

The shearband 22 is configured to receive the load exerted on the inner ring as tension in connecting structure 16 and to transfer this load to the ground, via the tread 20. When such a shearband 22 deforms under load, its preferred form of deformation is shear over bending. The shear mode of deformation may occur because of inextensible membranes located on the radially inner and the radially outer portions of the shearband but other possibilities may exist. The inner structure of the shearband 22 is not illustrated in the drawings. The shearband 22 could, for instance, include a sandwich structure with first and second reinforced annular rubber layers separated by an annular shear layer. The first and second reinforced rubber layers may be configured as essentially inextensible layers, e.g., may be formed of parallel inextensible reinforcement cords embedded in a rubber coating. The reinforcement cords could comprise, e.g., steel, aramid, or other fibers.

The shearband 22 and the connecting structure 16 may be configured so that the resulting stiffness is related to the spring rate of the tire 10. The connecting structure 16 may be configured to buckle or deform in the tire footprint (i.e., the part of the tire that is in contact with the ground). This implies that the rest of the connecting structure not in the footprint area (i.e., mainly the momentary upper part of the connecting structure) carries the load. The load distribution may be such that approximately 90-100% of the load is carried by the shearband and the momentary upper part of the connecting structure, so that the momentary lower part of the connecting structure carries only a small part of the load, and preferably less than approximately 10%.

The connecting structure 16 is preferably formed of thermoplastic material, even more preferably formed of a thermoplastic elastomer. The thermoplastic material may be selected based upon one or more of the following material properties: Young's modulus, glass transition temperature, yield strain at break, elongation at break, heat deflection temperature, etc. A thermoplastic material having a tensile (Young's) modulus in the range from 45 MPa to 650 MPa, and more preferably in the range of 85 MPa to 300 MPa, measured in accordance with the ISO 527-1/-2 standard test method, is preferred. Thermoplastic material having a glass transition temperature less than -25°C, and more preferably less than -35°C, are preferred. The yield strain at break of the thermoplastic material preferably amounts to at least 30%, and more preferably to at least 40%. The thermoplastic material preferably has an elongation at break greater than or equal to the yield strain, and more preferably, greater than or equal to 200%. The heat deflection temperature is preferably higher than 40°C, and more preferably more than 50°C, under a load of 0.45 MPa. The thermoplastic material preferably comprises a thermoplastic copolyester elastomer, e.g., DSM Products ARNITEL PM581, PL461, EM460, EM550, EM630, PL650, PL420, DUPONT Hytrel, a polyamide (e.g. nylon 6, nylon 6,6, nylon 6,12, nylon 12), a thermoplastic polyamide elastomer (e.g. Arkema PEBAX 7233, PEBAX 7033, PEBAX 6333). In case of PEBAX 6333, the curing temperature is preferably lowered in the range from 140°C to 150°C.

Examples of methods for assembling a rubber part and a thermoplastic part into a composite structure, in particular for producing non-pneumatic tire 10 with said parts assembled are discussed below.

The connecting structure 16 and the shearband 22 are preferably initially provided as separate parts. The connecting structure 16 may be prefabricated by any suitable process, e.g., extrusion, injection molding, thermoforming, heat welding, 3D printing, etc. The connecting structure 16 and the shearband 22 may each be provided as a single part or as a plurality of parts to be assembled. The connecting structure 16 comprises a radially outer surface, which is to serve as an interface.

The shearband 22 has a radially inner surface formed by curable rubber, which is to serve as a contact surface 26 with the connecting structure 16.

One or more cleaning steps of the contact surfaces may be carried out, if necessary. Additionally, or alternatively, preparation may include roughening and/or application of a pretreatment agent. Different surface preparation techniques may be combined when needed.

For example, the surface of the connecting structure 16 may be sanded (e.g. by manual sanding, by sandblasting, by dry ice roughening) so as to obtain a roughness equivalent in the range between P120 and P600, preferably in the range from P240 to P400. The roughened surface may be cleaned (e.g. by solvent cleaning, e.g. acetone in a first step followed by isopropanol, or by dry ice cleaning in a second step).

An atmospheric plasma polymerized coating may then be deposited on the, possibly roughened and cleaned, surface using e.g. acetylene as the polymerizable precursor, which may be polymerized using an argon plasma. The coating is chemically bonded to the thermoplastic surface. The thickness of the coating is preferably between 1 µm and 15 µm.

According to an embodiment, a rubber adhesive 28 is then applied (e.g. by brushing or spray coating) on the radially outer surface of the connecting structure 16. The rubber adhesive 28 comprises rubber. The rubber adhesive 28 preferably comprises at least one of a rubber cement and a rubber lattice, e.g. natural rubber latex. The rubber adhesive 28 is preferably adapted to both the thermoplastic material with the plasma polymerized coating comprising the carbon-carbon double bond and the curable rubber of the shearband 22. The rubber adhesive 28 may comprise at least one of reinforcing fillers (e.g. carbon black), one or more antioxidants, silica (e.g. precipitated amorphous silica). The rubber adhesive may comprise ZnO and/or sulfur. Also, the rubber adhesive may comprise one or more accelerators such as sulfenamides, thiurams, dithiocarbamates, mercaptobenzothiazoles and xanthates. Advantageously, the rubber adhesive 28 has the same (or substantially the same) composition as the curable rubber of the shearband 22. The rubber adhesive 28 is preferably water-based. The thickness of the rubber adhesive on the connecting structure is preferably between 0.1 mm and 3 mm, preferably between 0.5 mm and 2 mm

The rubber cement preferably comprises rubber dissolved in organic solvent such as toluene or cyclohexane or a mix of n-alkanes. For example, the rubber cement may be prepared as follows: adding 100 phr of natural rubber (cis 1.4-polyisoprene), 60 phr of carbon black (N326), 4 phr of antioxidants, 6 phr of zinc oxide, 5 phr of sulfur and 1.6 phr of sulfenamide accelerator. Toluene is then added so that toluene amounts to 85% by weight of the rubber cement. 15% by weight corresponds to the above-mentioned components.

The natural rubber latex may comprise 100 phr of natural rubber latex (e.g. 60% solid - cis 1.4-polyisoprene, low (or high) ammonia stabilized), 60 phr of carbon black (N326), 6 phr of antioxidants / anti-weathering agents (e.g. mix of anti-oxidants, anti-ozonants and waxes), 10 phr of zinc oxide dispersion, 6 phr of insoluble sulfur dispersion and 1.6 phr of sulfenamide accelerator. One or more pH stabilizers may be used. SBR based rubber instead of natural rubber is also contemplated.

In a next step, the rubber adhesive is preferably dried e.g. in an oven (for example in a drying tunnel at a temperature in the range from 30°C to 120°C, preferably from 40°C to 80°C) or at ambient conditions.

In a preferred embodiment, the rubber adhesive is applied directly after the plasma coating of the connecting structure, e.g. not more than 5 minutes, preferably not more than 3 minutes, after the coating of the thermoplastic part.

After application of the adhesive, the shearband (i.e. the radially inner surface) and the connecting structure (i.e. the adhesion interphase part with the rubber adhesive) are assembled into a composite structure. The green rubber to become the tread 20 may be arranged adjacent the radially outer surface of the shearband. The assembly of the individual parts may be carried out in a mold, or the assembled composite structure may be placed into a mold after assembly.

After assembly, the composite structure may be heated so as to durably bond the different parts, in particular the shearband and the connecting structure. The rubber parts may be cured during the same heat treatment step.

It will be understood that the rubber adhesive allows for durably bonding the connecting structure to the shearband. Also, the rubber adhesive has the added benefit of increasing the shelf life of the connecting structure in case the assembling with the shearband is not carried out directly after the coating by acetylene atmospheric plasma polymerization.

It will be understood that the adhesive mediates chemical bonding (including covalent and/or ionic bonding) between the shearband and the connecting structure only upon being subjected to the heat treatment. Nevertheless, the adhesive may be configured to increase the tack of the surface on which it is applied (in wet or dried state). This may be seen as helpful for the assembly and manipulation of the composite structure while it is still uncured. For instance, increased tack may be helpful to position the shearband and the connecting structure relative to each other and to keep these parts in that position until the curing has been effected.

The vulcanization of the rubber parts and the bonding of the shearband to the connecting structure is preferably carried out at a temperature below the softening temperature of the thermoplastic material. The curing temperature may, e.g., be comprised in the range from 120°C to 180°C (preferably 140° to 170°C) with the provison that the softening temperature of the employed thermoplastic material is not exceeded. The carbon-carbon double bond of the coating may participate to the vulcanization process in order to durably bond the connecting structure to the shearband.

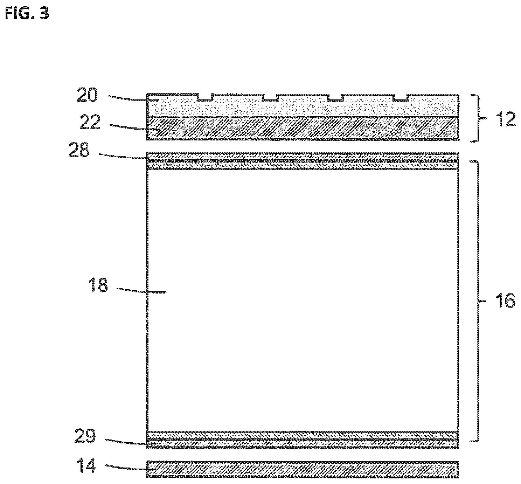

It should be noted that the present description focused on assembling the outer annular band 12 with the connecting structure 16. Of course, the same is also contemplated for the assembling of the inner annular band 14 with the connecting structure 16. As illustrated in Fig. 3, a rubber adhesive 29 may be provided to the connecting structure 16 (e.g. to its radially outer surface), in the same way as for the rubber adhesive 28, for assembling the same to the inner annular band 14. It is worthwhile noting that Fig. 3 shows an exploded view of the different elements of the non-pneumatic tire.

In some embodiments, at least one of the outer annular band 12 and inner annular band 14 is assembled according to the disclosure of the present invention. It is also worthwhile noting that the present invention was described with non-pneumatic tire but the principles are also applicable, in general, for assembling a rubber part and a thermoplastic part into a composite structure.

### Examples

A composite structure is formed by providing a 3 mm thick rubber layer (composition as disclosed in paragraph [0051] without toluene) and two 6"x6" plasma coated thermoplastic plates (ARNITEL EM630) with rubber cement (as disclosed in paragraph [0051]). 3 cm wide mylars films are provided on the side opposite to the rubber layer, bonded to the thermoplastic plates so as to provide a grip for the testing equipment to carry out peeling procedures. The composite structure is then cured in a press at 170°C for 13 minutes.

The cured composite structure is then die-cut into 1"-wide and 6" -long stripes (1" = 2.54 cm). A stripe is then placed in the testing equipment (ZwickRoell traction equipment) so as to peel the composite structure. The peeling is carried out according to ASTM D1876 T-Peel test, perpendicularly to the mylar surfaces. Instead of the 254 mm/min recommended in the standard, a rate of 50.8 mm/min is used, in order to avoid plastic deformation of the thermoplastic plates.

| **Rubber cement** | **Aging (days)** | **Peel. Temp. (°C)** | **Pull #1 Avg. force (N)** | **Pull #1 Avg. strength (N/mm)** | **Pull #1 Rubber coverage (%)** | **Pull #2 Avg. force (N)** | **Pull #2 Avg. strength (N/mm)** | **Pull #2 Rubber coverage (%)** |
|---|---|---|---|---|---|---|---|---|
| NO | 0 | 23 | 784.3 | 30.9 | 100 | 732.3 | 28.8 | 100 |
| NO | 0 | 100 | 675.2 | 26.6 | 100 | 649.8 | 25.6 | 100 |
| YES | 0 | 100 | 669.6 | 26.4 | 100 | 678.1 | 26.7 | 100 |
| YES | 0 | 23 | 747.6 | 29.4 | 100 | 780 | 30.7 | 100 |
| YES | 0 | 100 | 580.2 | 22.8 | 100 | 564.7 | 22.2 | 100 |
| NO | 12 | 23 | 48.2 | 1.9 | 0 | 62 | 2.4 | 0 |
| YES | 12 | 23 | 616.1 | 24.2 | 70 | 706.9 | 27.8 | 100 |
| YES | 12 | 100 | 610.5 | 24.0 | 100 | 586.9 | 23.1 | 100 |

While a sample without rubber adhesive and left at ambient temperature for 12 days showed little resistance to peeling (coverage 0%), samples according to the invention showed high resistance to peeling (coverage 100%). This highlights the benefits of using a rubber adhesive to extend shelf-life of plasma coated parts.

## Claims

1. A method of assembling a rubber part and a thermoplastic part into a composite structure, the method comprising:
providing a rubber part having a surface;
providing a thermoplastic part having a surface comprising a plasma polymerized coating comprising a carbon-carbon double bond;
applying a rubber adhesive (28, 29) on the coating;
bringing the rubber part surface and the thermoplastic part surface with the rubber adhesive into contact so as to form a composite structure; and
heat-treating the composite structure to bond the rubber part to the thermoplastic part.

2. The method of claim 1, wherein the composite structure is assembled in a mold or placed into a mold after assembly and wherein the heat-treatment of the composite structure comprises baking the composite structure in the mold.

3. The method of claim 1 or 2, wherein heat-treating the composite structure comprises heating the composite structure to a temperature in a range from 120°C to 180°C but below a softening temperature of the thermoplastic part.

4. The method of at least one of the previous claims, further comprising drying the rubber adhesive on the coating before bringing the rubber part and the thermoplastic part with the rubber adhesive into contact so as to form the composite structure.

5. The method of at least one of the previous claims, further comprising plasma coating the thermoplastic part by acetylene atmospheric plasma polymerization so as to provide the thermoplastic part with the surface comprising the plasma polymerized coating comprising a carbon-carbon double bond, and, optionally, wherein the applying of the rubber adhesive on the plasma polymerized coating is carried out directly after the plasma coating of the thermoplastic part.

6. The method of at least one of the previous claims, wherein the rubber adhesive comprises at least one of a rubber cement and a rubber lattice such as natural rubber latex.

7. The method of at least one of the previous claims, wherein the applying the rubber adhesive is carried out by spray coating.

8. The method of at least one of the previous claims, wherein the rubber adhesive is water-based.

9. The method of at least one of the previous claims, wherein the rubber adhesive comprises at least one of one or more reinforcing fillers such as carbon black, one or more antioxidants, silica such as precipitated amorphous silica, ZnO, sulfur, and one or more accelerators such as sulfenamides, thiurams, dithiocarbamates, mercaptobenzothiazoles and xanthates.

10. A method for producing a non-pneumatic tire, the method comprising:
providing a shearband (22) comprising curable rubber; the shearband (22) having a radially inner surface formed by the curable rubber;
providing a connecting structure (16) for connecting the shearband (22) to a wheel hub, the connecting structure (16) comprising an adhesion interphase part made of thermoplastic material with a plasma polymerized coating comprising a carbon-carbon double bond;
applying a rubber adhesive (28, 29) on the coating;
bringing the radially inner surface and the adhesion interphase part with the rubber adhesive into contact so as to form a composite structure; and
heat-treating the composite structure to bond the shearband (22) to the connecting structure (16), the bond being mediated by at least part of the rubber adhesive (28, 29) and the plasma polymerized coating.

11. The method of claim 10, wherein the composite structure is assembled in a mold or placed into a mold after assembly and wherein the heat-treatment of the composite structure comprises baking the composite structure in the mold.

12. The method of claim 11, wherein heat-treating the composite structure comprises heating the composite structure to a temperature in a range from 120°C to 180°C but below a softening temperature of the thermoplastic part.

13. The method of at least one of the claims 10 to 12, further comprising drying the rubber adhesive on the coating before bringing the radially inner surface and the adhesion interphase part with the rubber adhesive into contact so as to form the composite structure.

14. The method of at least one of the claims 10 to 13, comprising plasma coating the connecting structure by acetylene atmospheric plasma polymerization so as to provide the connecting structure with the adhesion interphase part.

15. The method of at least one of the claims 10 to 15, wherein the applying of the rubber adhesive on the plasma polymerized coating is carried out directly after the plasma coating of the connecting structure.

## Patentansprüche

1. Verfahren zum Zusammensetzen eines Kautschukelements und eines thermoplastischen Elements, um eine Verbundstruktur zu erzielen, wobei das Verfahren das Folgende umfasst:
das Bereitstellen eines Kautschukelements, das eine Oberfläche besitzt;
das Bereitstellen eines thermoplastischen Elements, das eine Oberfläche besitzt, die einen plasma-polymerisierten Belag umfasst, der selbst eine Kohlenstoff-Kohlenstoff-Doppelbindung umfasst;
das Auftragen eines Kautschukklebstoffs (28, 29) auf den Belag;
das In-Kontakt-Bringen der Oberfläche des Kautschukelements mit der Oberfläche des thermoplastischen Elements, das den Kautschukklebstoff umfasst, um eine Verbundstruktur zu erzielen; und
das Unterziehen der Verbundstruktur einer Wärmebehandlung, um das Kautschukelement mit dem thermoplastischen Element zu verkleben.

2. Verfahren nach Anspruch 1, wobei die Verbundstruktur in einer Form zusammengesetzt wird oder nach dem Zusammensetzen in eine Form eingebracht wird; und wobei die Wärmebehandlung der Verbundstruktur das Brennen der Verbundstruktur in der Form umfasst.

3. Verfahren nach Anspruch 1 oder 2, wobei die Wärmebehandlung der Verbundstruktur das Erhitzen der Verbundstruktur auf eine Temperatur umfasst, die in einem Bereich von 120 °C bis 180 °C liegt, jedoch unterhalb einer Erweichungstemperatur des thermoplastischen Elements liegt.

4. Verfahren nach mindestens einem der vorhergehenden Ansprüche, das ferner das Trocknen des Kautschukklebstoffs auf dem Belag umfasst, bevor das Kautschukelement mit dem thermoplastischen den Kautschukklebstoff umfassenden Element in Kontakt gebracht wird, um die Verbundstruktur zu erzielen.

5. Verfahren nach mindestens einem der vorhergehenden Ansprüche, das ferner Folgendes umfasst: das Versehen des thermoplastischen Elements mit einem Plasmabelag durch eine Acetylen-Plasmapolymerisation unter Atmosphärendruck, um das thermoplastische eine Oberfläche umfassende Element, das den plasmapolymerisierten Belag umfasst, der selbst eine Kohlenstoff-Kohlenstoff-Doppelbindung umfasst, zu erzielen; und wobei optional das Auftragen des Kautschukklebstoffs auf den plasmapolymerisierten Belag direkt nach dem Plasmabeschichten des thermoplastischen Elements erfolgt.

6. Verfahren nach mindestens einem der vorhergehenden Ansprüche, wobei der Kautschukklebstoff mindestens ein Element umfasst, das aus einem Kautschukzement und einem Kautschuklatex wie einem Naturkautschuklatex ausgewählt ist.

7. Verfahren nach mindestens einem der vorhergehenden Ansprüche, wobei das Auftragen des Klebstoffs aus Kautschuk durch eine Sprühbeschichtung erfolgt.

8. Verfahren nach mindestens einem der vorhergehenden Ansprüche, wobei der Kautschukklebstoff auf Wasserbasis ist.

9. Verfahren nach mindestens einem der vorhergehenden Ansprüche, wobei der Kautschukklebstoff mindestens einen oder mehrere verstärkende Füllstoffe wie Ruß, ein oder mehrere Antioxidationsmittel, Silica wie gefälltes amorphes Silica, ZnO, Schwefel und einen oder mehrere Beschleuniger wie Sulfonamide, Thiurame, Dithiocarbamate, Mercatobenzothiazole und Xanthate umfasst.

10. Verfahren zur Herstellung eines Nicht-Luftreifen, wobei das Verfahren Folgendes umfasst:
das Bereitstellen eines Scherbandes (22), das einen vulkanisierbaren Kautschuk umfasst, wobei das Scherband (22) eine in der radialen Richtung innere Oberfläche aufweist, die aus dem vulkanisierbaren Kautschuk hergestellt wird;
das Bereitstellen einer Verbindungsstruktur (16) zum Verbinden des Scherbandes (22) mit einer Radnabe, wobei die Verbindungsstruktur (16) ein Grenzflächenhaftelement umfasst, das aus einem thermoplastischen Material hergestellt ist, das einen plasma-polymerisierten Belag umfasst, der selbst eine Kohlenstoff-Kohlenstoff-Doppelbindung umfasst;
das Aufbringen eines Kautschukklebstoffs (28, 29) auf den Belag;
das In-Kontakt-Bringen der in der radialen Richtung inneren Oberfläche mit dem Grenzflächenhaftelement, das den Kautschukklebstoff umfasst, um eine Verbundstruktur zu erzielen; und
das Unterziehen der Verbundstruktur einer Wärmebehandlung, um das Scherband (22) mit der Verbindungsstruktur (16) zu verkleben, wobei mindestens ein Teil des Kautschukklebstoffs (28, 29) und des plasma-polymerisierten Belags das Mittel darstellt, das zur Herstellung der Verbindung verwendet wird.

11. Verfahren nach Anspruch 10, wobei die Verbundstruktur in einer Form zusammengesetzt wird oder in einer Form nach ihrem Zusammensetzen angebracht wird; und wobei die Wärmebehandlung der Verbundstruktur das Brennen der Verbundstruktur in der Form umfasst.

12. Verfahren nach Anspruch 1 1, wobei die Wärmebehandlung der Verbundstruktur das Erhitzen der Verbundstruktur auf eine Temperatur umfasst, die in einem Bereich von 120 °C bis 180 °C liegt, jedoch unterhalb einer Erweichungstemperatur des thermoplastischen Elements liegt.

13. Verfahren nach mindestens einem der Ansprüche 10 bis 12, das ferner das Trocknen des Kautschukklebstoffs auf dem Belag umfasst, bevor das Kautschukelement mit dem thermoplastischen Element, das den Kautschukklebstoff umfasst, in Kontakt gebracht wird, um die Verbundstruktur zu erzielen.

14. Verfahren nach mindestens einem der Ansprüche 10 bis 13, das ferner Folgendes umfasst: das Versehen der Verbindungsstruktur mit einem Plasmabelag durch eine Acetylen-Plasmapolymerisation unter Atmosphärendruck, um die Verbindungsstruktur mit dem Haftelement an der Grenzfläche zu versehen.

15. Verfahren nach mindestens einem der Ansprüche 10 bis 14, wobei die Aufbringung des Kautschukklebstoffs auf den plasmapolymerisierten Belag unmittelbar nach der Plasmabeschichtung der Verbindungsstruktur erfolgt.

## Revendications

1. Procédé d'assemblage d'un élément en caoutchouc et d'un élément thermoplastique afin d'obtenir une structure composite, le procédé comprenant le fait de :
procurer un élément en caoutchouc qui possède une surface ;
procurer un élément thermoplastique qui possède une surface qui comprend un revêtement polymérisé par plasma qui lui-même comprend une liaison double carbone-carbone ;
appliquer un adhésif de caoutchouc (28, 29) sur le revêtement ;
amener la surface de l'élément en caoutchouc en contact avec la surface de l'élément thermoplastique qui comprend l'adhésif de caoutchouc de manière à obtenir une structure composite ; et
soumettre la structure composite à un traitement thermique afin de coller l'élément en caoutchouc à l'élément thermoplastique.

2. Procédé selon la revendication 1, dans lequel la structure composite est assemblée dans un moule ou est placée dans un moule après son assemblage ; et dans lequel le traitement thermique de la structure composite comprend la cuisson de la structure composite dans le moule.

3. Procédé selon la revendication 1 ou 2, dans lequel le traitement thermique de la structure composite comprend le fait de chauffer la structure composite jusqu'à une température qui se situe dans une plage allant de 120 °C à 180 °C, mais qui est inférieure à une température de ramollissement de l'élément thermoplastique.

4. Procédé selon au moins une des revendications précédentes, qui comprend en outre le fait de sécher l'adhésif de caoutchouc sur le revêtement avant d'amener l'élément en caoutchouc en contact avec l'élément thermoplastique qui comprend l'adhésif de caoutchouc de façon à obtenir la structure composite.

5. Procédé selon au moins une des revendications précédentes, qui comprend en outre le fait de munir l'élément thermoplastique d'un revêtement par plasma par l'intermédiaire d'une polymérisation par plasma sous pression atmosphérique à base d'acétylène de façon à obtenir l'élément thermoplastique qui comprend la surface comprenant le revêtement polymérisé par plasma qui lui-même comprend une liaison double carbone-carbone ; et, de manière facultative, dans lequel l'application de l'adhésif de caoutchouc sur le revêtement polymérisé par plasma est mise en œuvre directement après le revêtement par plasma de l'élément thermoplastique.

6. Procédé selon au moins une des revendications précédentes, dans lequel l'adhésif de caoutchouc comprend au moins un élément qui est choisi parmi un ciment de caoutchouc et un latex de caoutchouc tel qu'un latex de caoutchouc naturel.

7. Procédé selon au moins une des revendications précédentes, dans lequel l'application de l'adhésif de caoutchouc est mise en œuvre par l'intermédiaire d'un revêtement par pulvérisation.

8. Procédé selon au moins une des revendications précédentes, dans lequel l'adhésif de caoutchouc est à base d'eau.

9. Procédé selon au moins une des revendications précédentes, dans lequel l'adhésif de caoutchouc comprend au moins une ou plusieurs matières de charge faisant office de renforcement, telles que du noir de carbone, un ou plusieurs antioxydants, de la silice telle que de la silice amorphe précipitée, du ZnO, du soufre, et un ou plusieurs accélérateurs tels que des sulfonamides, des thiurames, des dithiocarbamates, des mercatobenzothiazoles et des xanthates.

10. Procédé destiné à la production d'un bandage non pneumatique, le procédé comprenant le fait de :
procurer une bande de cisaillement (22) qui comprend un caoutchouc vulcanisable, dans lequel la bande de cisaillement (22) possède une surface, interne dans la direction radiale, que l'on obtient à partir du caoutchouc vulcanisable ;
procurer une structure de liaison (16) destinée à la liaison de la bande de cisaillement (22) à un moyeu de roue, dans lequel la structure de liaison (16) comprend un élément d'adhérence à l'interface, qui est réalisé à partir d'une matière thermoplastique qui comprend un revêtement polymérisé par plasma qui lui-même comprend une liaison double carbone-carbone ;
appliquer un adhésif de caoutchouc (28, 29) sur le revêtement ;
amener la surface, interne dans la direction radiale, en contact avec l'élément d'adhérence à l'interface qui comprend l'adhésif de caoutchouc de façon à obtenir une structure composite ; et
soumettre la structure composite à un traitement thermique afin de coller la bande de cisaillement (22) à la structure de liaison (16), dans lequel au moins une partie de l'adhésif de caoutchouc (28, 29) et du revêtement polymérisé par plasma représente le moyen que l'on utilise pour la réalisation de la liaison.

11. Procédé selon la revendication 10, dans lequel la structure composite est assemblée dans un moule ou est placée dans un moule après son assemblage ; et dans lequel le traitement thermique de la structure composite comprend la cuisson de la structure composite dans le moule.

12. Procédé selon la revendication 11, dans lequel le traitement thermique de la structure composite comprend le fait de chauffer la structure composite jusqu'à une température qui se situe dans une plage allant de 120 °C à 180 °C, mais qui est inférieure à une température de ramollissement de l'élément thermoplastique.

13. Procédé selon au moins une des revendications 10 à 12, qui comprend en outre le fait de sécher l'adhésif de caoutchouc sur le revêtement avant d'amener l'élément en caoutchouc en contact avec l'élément thermoplastique qui comprend l'adhésif de caoutchouc de façon à obtenir la structure composite.

14. Procédé selon au moins une des revendications 10 à 13, qui comprend en outre le fait de munir la structure de liaison d'un revêtement par plasma par l'intermédiaire d'une polymérisation par plasma sous pression atmosphérique à base d'acétylène de façon à munir la structure de liaison de l'élément d'adhérence à l'interface.

15. Procédé selon au moins une des revendications 10 à 14, dans lequel l'application de l'adhésif de caoutchouc sur le revêtement polymérisé par plasma est mise en œuvre directement après le revêtement par plasma de la structure de liaison.
